Europäisches Patentamt

European Patent Office

Office européen des brevets

(19)

(11) Publication number: 0 386 756

A1

(12) EUROPEAN PATENT APPLICATION

(21) Application number: 90104438.8

(22) Date of filing: 08.03.90

(51) Int. Cl.5: C03B 37/029, C03B 37/027

(30) Priority: 08.03.89 JP 55884/89
08.11.89 JP 290262/89

(43) Date of publication of application:
12.09.90 Bulletin 90/37

(84) Designated Contracting States:
DE FR GB IT NL

(71) Applicant: SUMITOMO ELECTRIC INDUSTRIES,
LTD.
5-33, Kitahama 4-chome Chuo-ku
Osaka-shi Osaka-fu(JP)

(72) Inventor: Yoshimura, Ichiro, c/o Yokohama
Works of Sumimoto
Electric Industries, Ltd., 1, Taya-cho,
Sakae-ku

Yokohama-shi, Kanagawa-ken(JP)
Inventor: Mtsuda, Yasuo, c/o Yokohama
Works of Sumimoto
Electric Industries, Ltd., 1, Taya-cho,
Sakae-ku
Yokohama-shi, Kanagawa-ken(JP)
Inventor: Takagi, Masahiro, c/o Yokohama
Works of Sumimoto
Electric Industries, Ltd., 1, Taya-cho,
Sakae-ku
Yokohama-shi, Kanagawa-ken(JP)

(74) Representative: Füchsle, Klaus, Dipl.-Ing. et al
Hoffmann . Eitle & Partner Patentanwälte
Arabellastrasse 4
D-8000 München 81(DE)

(54) Furnace and process for optical fiber drawing.

(57) The drawing furnace comprises:- an accommodating member (21, 22) in which a preform (1) for the optical fiber is accommodated, a muffle tube (3) connected with the accommodating member (21, 22), around which a heating means (41) is disposed and in which a tip portion of the preform is heated and melted, and means for supplying an inert purging gas into the muffle tube (3) or into both the accommodating member and the muffle tube (3). At least a portion of either the muffle tube (3) and/or the accommodating member (21, 22) comprises at least two furnace walls, the adjacent walls of which have a space between them, whereby the outermost one of the walls has an inlet (24) through which the inert purging gas (e.g. N2) is supplied into the space and the innermost one an outlet (25) through which the purging gas leaves the space after flowing through the space between the adjacent walls and having thereby been heated.

Fig. 4

## FURNACE AND PROCESS FOR OPTICAL FIBER DRAWING

### BACKGROUND OF THE INVENTION

#### Field of the Invention

The present invention relates to a drawing furnace for an optical fiber. In particular, the present invention relates to a drawing furnace and a drawing process for the production of an optical fiber with a small fluctuation in its diameter at a low cost.

#### Description of the Related Art

When an optical fiber is produced in a drawing furnace in which a preform for the optical fiber is heated, melted and drawn, a purging inert gas is supplied in the furnace in a suitable direction in order to adjust a diameter of the optical fiber. For example, Japanese Patent Kokai Publication No. 65458/1977 describes an apparatus in which the purging gas is uniformly flowed down along the preform for the optical fiber in the drawing furnace to keep the diameter of the optical fiber uniform. This apparatus is provided with a gas curtaining device which blows the gas against a tip portion of the preform for the optical fiber in the furnace. The blown gas is controlled in such amount that makes a flow of the gas in the furnace laminar and is more than an amount of an upflow generated in the furnace.

In a carbon made furnace which is usually used as the optical fiber drawing furnace, gases such as $N_2$, Ar or He is used as the inert purging gas. The Japanese Patent Kokai Publication No. 119949/1977 describes a process for preventing the fluctuation in the diameter of the optical fiber by supplying the inert gas in the drawing furnace after heating. In the process, $N_2$ gas is heated to 600 °C.

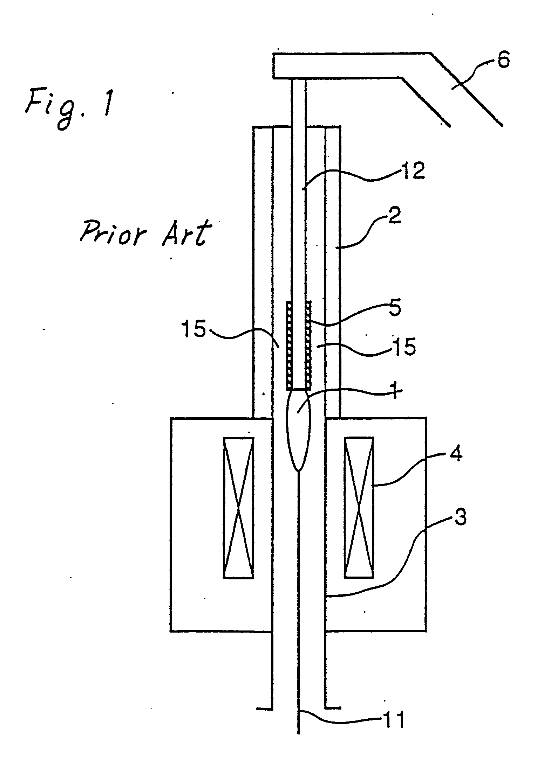

In order to heat the inert gas, a hot gas generator disposed outside the drawing furnace is usually employed. Japanese Patent Kokai Publication No. 88325/1979 describes a process in which a portion of the drawing furnace above the preform for the optical fiber is narrowed so that the purging gas passing said portion can be heated by remaining heat of a heater which heats and melts the preform. The process is shown in Fig. 1.

A drawing furnace for the optical fiber shown in Fig. 1 comprises a muffle tube 3 in which the preform 1 for the optical fiber is accommodated, a cylindrical member 2 which is connected to the upper potion of the muffle tube 3 and from the vicinity of an upper end of which the purging gas is supplied, and a heater 4 which is disposed around the muffle tube 3 and heats and melts the preform 1. The preform 1 is suspended through the upper potion of the cylindrical member with a preform supporting rod 12, which is fixed to a feeder 6 disposed above the cylindrical member 2. The preform is drawn downward to form the optical fiber 11. The feeder 6 moves the preform supporting rod 12 vertically so that the preform 1 is suitably located. A portion of the supporting rod 12 immediately above the preform 1 is covered with a sleeve 5 so that a space between the rod and the cylindrical member 2 is narrowed as a heating section 15. The purging gas reaches the vicinity of the preform 1 after efficiently heated in the narrowed portion.

Further, Japanese Patent Kokai Publication No. 134135/1979 describes a process in which He is used as the inert gas in the process described above. When He is used, rapid heating of the gas can be achieved and the fluctuation in the diameter of the optical fiber is suppressed.

In the production of the optical fiber using the apparatuses and the methods as described above, the following problems arise:

In the process which uses the hot gas generator, a maximum temperature of the heated gas is about 800 °C. In addition, even if the gas is preheated to near the same high temperature as a heating source, the temperature of the gas which approaches near the preform decreases since an amount of heat is lost by conduits to outlets and members around the outlets.

Recently, a tolerance of the diameter of the optical fiber is strictly small, and then the diameter fluctuation (for example ± 0.8 $\mu$m) which can be attained in the case where the purging gas heated to 800 °C is used is not necessarily satisfactory. However, there is no practical means to preheat the purging gas substantially above 800 °C and keep the temperature till the gas reaches the vicinity of the preform.

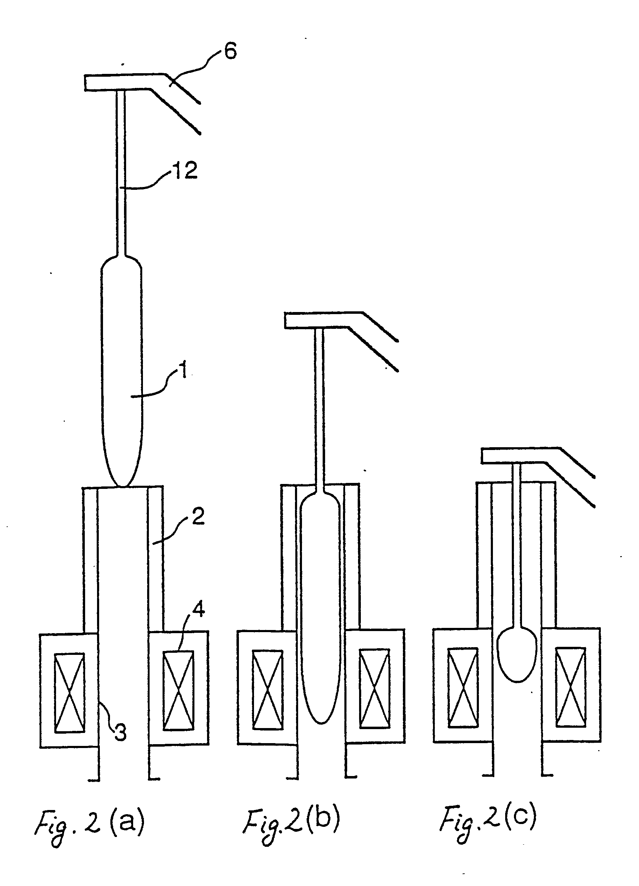

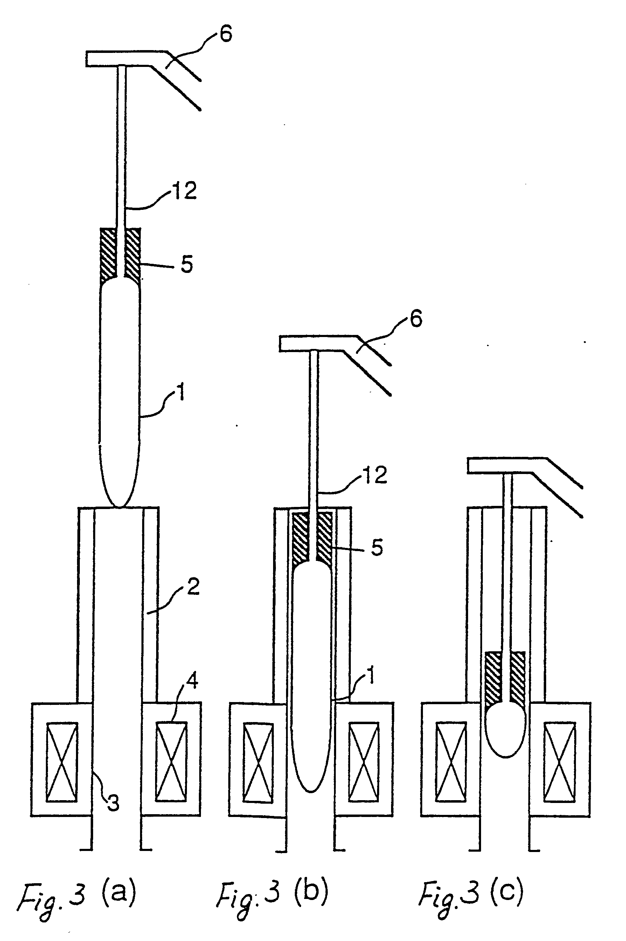

In order to sufficiently heat the purging gas, for example, in the process as shown in Fig. 1, a length of the heating section 15 must be extended, and then a length of the sleeve 5 must be increased. In connection with this, the cylindrical member 2, the preform supporting rod 12 and a stroke distance of the feeder 6 must be extended. In order to compare the furnace without the heating section 15 with the furnace comprising the same, the former is shown in Figs. 2 (a), 2 (b) and 2 (c) and the latter in Figs. 3 (a), 3 (b) and 3 (c). In Figs. 2 (a) and 3 (a), a new preform 1 is just inserted into the drawing furnace and the feeder 6 is located at the highest position. In comparison with Fig. 2 (a), the level of the feeder 6 is higher by the total length of the extended portions of the cylindrical member 2 and the preform supporting rod 12 in Fig. 3 (a). In Figs. 2 (b) and 3 (b), the preform 1 is accommodated in a preselected position in the drawing furnace. In comparison with Fig. 2 (b), the cylindrical member 2 is extended by the length of the sleeve 5 in Fig. 3 (b). In Figs. 2 (c) and 3 (c), drawing is completed and, therefore, the preform is located at the lowest level. In comparison with Fig. 2 (c), the supporting rod 12 is extended by the length of the extended cylindrical member 2 in Fig. 3 (c). Thus, the cylindrical member 2 and the supporting rod 12 of the drawing furnace for the optical fiber and the stroke distance of the feeder 6 should be extended for the process in which the sleeve 5 is used.

In the process using He gas, He is expensive. When He gas is used, a production cost of the optical fiber is twenty times as large as that when N₂ gas is used.

SUMMARY OF THE INVENTION

It is an object of the present invention to provide a drawing furnace and a drawing process for the production of an optical fiber in which the above problems are overcome, a cheap purging gas which is sufficiently heated is supplied and members constituting the furnace do not have to be extended.

According to the present invention, there is provided a drawing furnace for an optical fiber comprising an accommodating member in which a preform for the optical fiber is accommodated, a muffle tube which is connected with the accommodating member, around which a heating means is disposed and in which a tip portion of the preform is heated and melted, and means for supplying an inert purging gas in the muffle tube or in both of the accommodating member and the muffle tube characterized in that at least a portion of at least one of the muffle tube and the accommodating member comprises at least two furnace walls adjacent walls of which have a space between them, the outermost one of them has an inlet through which the purging gas is supplied in the space, the innermost one of them has an outlet through which the purging gas leaves the space after flowing the space between the adjacent walls.

According to the present invention, there is also provided a process for drawing an optical fiber from a preform in which an inert purging gas is supplied inside the drawing furnace of the present invention after preheated to a temperature above 800 °C between the adjacent walls of the furnace.

BRIEF DESCRIPTION OF THE DRAWINGS

Fig. 1 schematically shows an axial sectional view of the drawing furnace for the optical fiber comprising the conventional purging gas heating section,

Figs. 2 and 3 schematically show comparison of the drawing furnace for the optical fiber as shown in Fig. 1 with the older typical drawing furnace for the optical fiber,

Fig. 4 schematically shows an axial sectional view of one embodiment of the drawing furnace for the optical fiber according to the present invention,

Fig. 5 schematically shows a transverse sectional view of one embodiment of the cylindrical member which can be used in the drawing furnace of the present invention,

Fig. 6 schematically shows an axial sectional view of another embodiment of the drawing furnace for the optical fiber according to the present invention,

Fig. 7 schematically shows an axial sectional view of a portion of a modified furnace from the furnace shown in Fig. 6, and

Fig. 8 schematically shows an axial sectional view of a modified furnace from the furnace shown in Fig. 4.

DETAILED DESCRIPTION OF THE INVENTION

In the drawing furnace for the optical fiber according to the present invention, the purging gas is heated while it flows through the space between the adjacent walls. Heating of the purging gas can be carried out effectively by selecting a form and a volume of the space between the adjacent walls depending on an amount of the purging gas, an amount of heat generated by the heating means and a temperature in the furnace. According to the present invention, any member constituting the furnace does not have to be extended. Such extension of the member is required in the conventional furnace as described in the related art.

In the present furnace, when a temperature of the purging gas is low due to, for example, a large flow rate thereof, it is preferred to provide a second heating means and/or an insulation around the plurality of the walls. The second heating means provided around the walls ensures effective heating of the purging gas.

For example, the plurality of walls of the present invention can be constituted by a plurality of cylindrical members which have different diameters and are disposed concentrically such that an axis of the furnace corresponds to an axis of each member. In this case, an inner diameter of an innermost cylindrical member should be larger than an outer diameter of the preform for the optical fiber. The innermost cylindrical member is preferably made of carbon or a metal which has a melting point of at least 1000 °C and a thermal conductivity of at least 50 W/mK. When the cylindrical member is made of carbon, its surface is preferably coated with SiC. Since the temperature in the drawing furnace is usually raised to above 2000 °C on melting of the preform, the innermost cylindrical member of the drawing furnace is heated to above 800 °C. Thus, the member is preferably made of a material such as SiC which can withstand such a high temperature.

In order to heat the purging gas efficiently, the cylindrical member has preferably the large thermal conductivity. In addition, the high temperature is preferably kept by preventing heat transfer from the cylindrical member to other members. Then, the cylindrical member is preferably thermally insulated from other members of the drawing furnace. In order to thermally insulate the innermost cylindrical member, it is supported by a supporting member which is made of a material such as quartz having a small thermal conductivity.

In the drawing furnace according to the present invention, the outlet through which the purging gas is blown is preferably provided near a lower end of the innermost cylindrical member. Because the purging gas must be flowed along as a long distance as possible in order to be heated efficiently.

To further extend the distance along which the purging gas flows, the walls are designed in a multi-walled, for example, a triple-walled structure in which there is a space between adjacent walls. Then, the inlet for the purging gas is disposed at a lower end of an outermost wall, a passage for the gas at an upper end of a middle wall, and the outlet for the gas at a lower end of an innermost wall. In this case, the temperature of the purging gas gets higher since the purging gas is heated during flowing up between the outermost wall and the middle wall and also during flowing down between the middle wall and the innermost wall. In the use of the drawing furnace according to the present invention, the purging gas can be suitably heated by selecting the number of walls and the position of the inlet and the outlet of the purging gas.

The present invention also provides the process for drawing the optical fiber using the drawing furnace described above. The process according to the present invention is characterized in that the purging gas is preheated to at least 800 °C in the space between the adjacent walls and supplied in the furnace inside. Since the temperature of the purging gas is so high as 800 °C which is higher than the temperature achieved with the conventional furnace, the optical fiber produced by the process according to the present invention has a better quality with no or little fluctuation in diameter.

The present invention will be hereinafter described in detail with reference to embodiments and examples. They are only examples of the present invention and do not limit the scope of the present invention.

PREFERRED EMBODIMENTS OF THE INVENTION

Embodiment 1 and Example 1

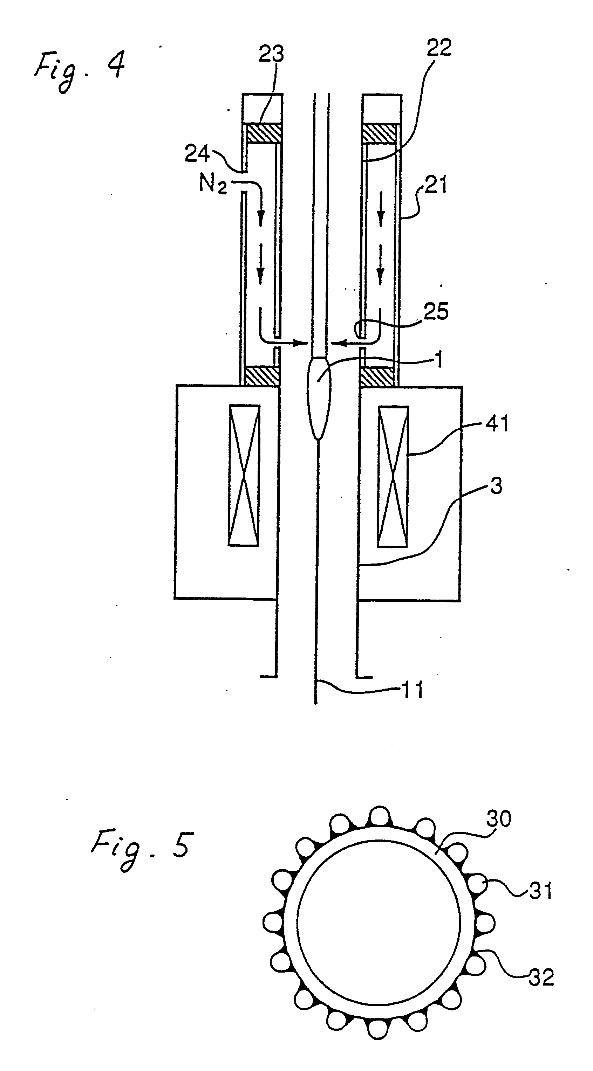

One example of the drawing furnace for the optical fiber according to the present invention is shown in Fig. 4. The furnace shown in Fig. 4 is provided with a high-frequency coil 41 around the muffle tube 3 for induction-heating of the preform 1 for the optical fiber. A first cylindrical member 21 and a second cylindrical member 22 are concentrically provided on the muffle tube 3. The first member 21 has a diameter larger than that of the muffle tube 3 and the second member 22 has an outer diameter smaller than the inner diameter of the first member 21 and has nearly the same inner diameter as that of the muffle tube 3. The second cylindrical member 22 forms an accommodating section for the preform 1 and is connected with the muffle tube 3 and the first member 21 through a supporting member 23 made of quartz. The second member 22 is preferably made of copper, brass, nickel or carbon, since such material has a large thermal conductivity and a good thermal resistance. The inlet 24 for the purging gas is disposed near the upper end of the first cylindrical member 21, and outlets 25 for the purging gas are disposed entirely around the second cylindrical member near the lower end thereof. The outlets 25 for the purging gas are shaped such that the flow of the purging gas supplied inside the furnace is not disturbed. For example, they may constitute a kind of a ring slit. As seen from this embodiment, the number of the outlet may be one or more. Also, the number of the inlet may be one or more.

In the furnace according to the present invention, cheap gas such as $N_2$ gas is used as the inert purging gas. The purging gas is not limited to $N_2$, and the conventionally used gas such as Ar or He may be used. The purging gas supplied through the inlet 24 is heated while it falls down the flowing path between the first cylindrical member 21 and the second cylindrical member 22. The second cylindrical member 22 is kept at a rather high temperature due to thermal radiation and/or thermal conduction from the muffle tube 3 and the temperature of the second member is higher in the portion which is nearer to the muffle tube 3. Then, when the purging gas leaves the outlet 25, it is preheated to near the same temperature as that of the upper end of the muffle tube and the kinematic viscosity of the gas is large, whereby the disturbance and the temperature fluctuation of the gas around the melting portion of the preform 1 are suppressed.

The preform 1 for the optical fiber is suspended from the above of the furnace by the preform supporting rod 12. The preform 1 heated and melted by the high-frequency coil 41 is stretched from outside below the bottom of the furnace to form the optical fiber 11. As the preform 1 is shortened, the supporting rod 12 is lowered vertically such that the melting portion is located at a preselected position.

With the use of the drawing furnace for the optical fiber as shown in Fig. 4 wherein the inner diameter of the muffle tube 3 was 60 mm and the second cylindrical member 22 was made of carbon, the preform 1 for the optical fiber which had the diameter of 50 mm and was fixed to the supporting rod 12 having the diameter of 25 mm was drawn according to the present process. When the furnace was heated such that the temperature around the preform 1 in the furnace was 2080 $^\circ$C, the temperature of the carbon made cylindrical member near the outlet 25 for the purging gas was 1200 $^\circ$C. When the temperature of $N_2$ gas immediately after blown from the outlet 25 was measured without any influence of the thermal radiation from the muffle tube 3, it was 1150 $^\circ$C $\pm$ 0.5 $^\circ$C. When the drawing of the optical fiber was carried out at a drawing rate of 200 m/min., the outer diameter of the obtained optical fiber was 125 $\mu$m $\pm$ 0.5 $\mu$m or less.

Though the present embodiment comprises the high-frequency coil 41 disposed around the muffle tube 3 as the heating means for the preform 1, heating may be carried out by directly applying a voltage to the muffle tube 3 or by directly heating the preform with a heater instead of providing the muffle tube 3.

In the drawing furnace of the present embodiment, when the space between the first cylindrical member 21 and the second cylindrical member 22 is too large, efficient heating of the purging gas cannot be achieved. For the efficient heating, projections which work as radiating fins may be preferably provided outside the cylindrical member 22.

When a material such as stainless steel having a small thermal conductivity is used, the cylindrical member 22 is locally heated at a high temperature, which causes not only ineffective heating of the gas but also a problem on safety such as cracking of a member due to strain. Since the present furnace is constituted such that the double-walled portion is heated and the material having the large thermal conductivity is used for the cylindrical member 22, the temperature near the outlets 25 for the purging gas may be decreased. A temperature distribution within the cylindrical member 22 may be controlled to some extent by partially varying a wall thickness thereof. In addition, the cylindrical member 22 having a suitable thermal conductivity can be obtained by combining a material such as stainless steel having a small thermal conductivity with a material such as copper having a large thermal conductivity.

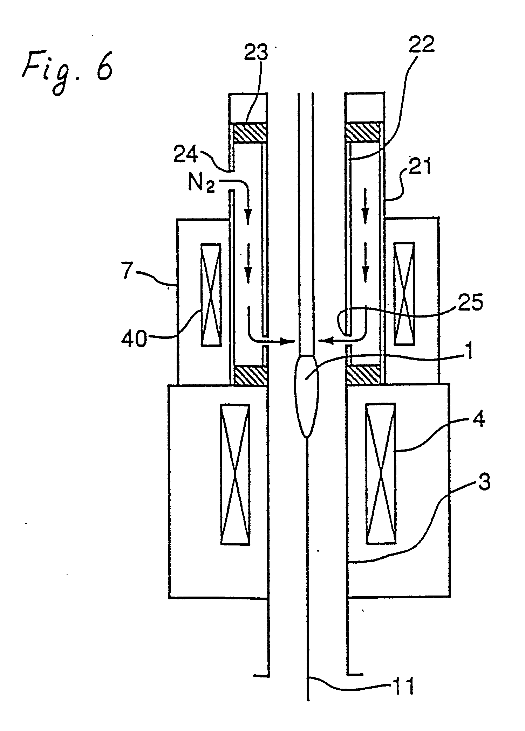

The combined cylindrical member 22 of copper and stainless steel is sectionally shown in Fig. 5. The cylindrical member 22 shown in Fig. 5 comprises a stainless steel pipe 30 to which outer surface copper wires 31 are brazed with a nickel solder 32 having a good thermal resistance.


Embodiment 2 and Example 2

The second embodiment of the drawing furnace for the optical fiber according to the present invention is shown in Fig. 6. The furnace shown in Fig. 6 is the same as the first embodiment as shown in Fig. 4 except that a heater 40 and an insulation 7 are provided around the cylindrical member 21. In the furnace as shown in Fig. 6, carbon rather than a metal is preferably used for the cylindrical member 21 since the temperature of the member is higher than in the case as shown in Fig. 4. When the carbon made cylindrical member 21 is used, an inert atmosphere should be formed with, for example, $N_2$ gas around the member since portions of the member which are heated to above 400 $^\circ$C severely suffer from oxidative consumption in the air.

With the use of the drawing furnace for the optical fiber as shown in Fig. 6 wherein the inner diameter of the muffle tube 3 was 60 mm and the second cylindrical member 22 was made of carbon, the preform 1 for the optical fiber which had the diameter of 50 mm and was fixed to the supporting rod 12 having the diameter of 25 mm was drawn according to the present process. The furnace was heated such that the temperature around the preform 1 in the furnace was 2050 $^\circ$C and the temperature of the cylindrical member 22 near the outlets 25 of the purging gas was 1500 $^\circ$C. When the temperature of $N_2$ gas immediately after blown from the outlets 25 was measured without any influence of thermal radiation from the muffle tube 3, it was 1450 $^\circ$C $\pm$ 0.5 $^\circ$C. When the drawing of the optical fiber was carried out at the drawing rate of 200 m/min., the outer diameter of the obtained optical fiber was 125 $\mu$m $\pm$ 0.2 $\mu$m.

In this example, the furnace temperature was 2050 °C which is lower than the conventionally used temperature 2100 °C. However, it was possible to draw the preform even at such a temperature at the same rate as conventionally used.

In the furnace of the present embodiment, though the edge portions of the cylindrical member 22 are supported by the quartz made supporting members 23 and thermally insulated from other members, thermally insulating manner for the cylindrical member 22 is not limited to this embodiment.

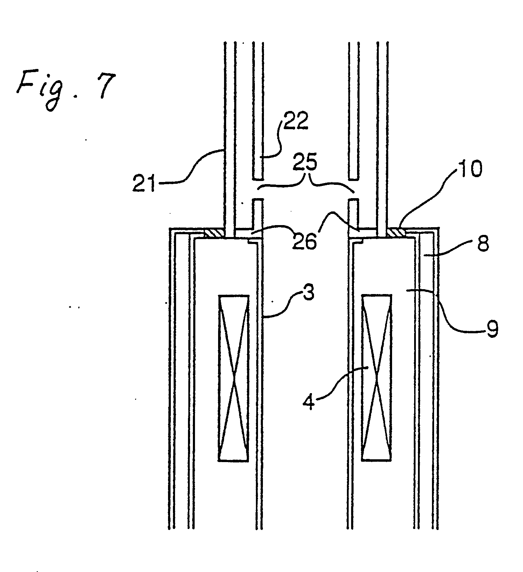

Another embodiment for thermally insulating the cylindrical member 22 is shown in Fig. 7. In the embodiment shown in Fig. 7, the cylindrical member 22 has a flange portion at the lower end 26 which directly contacts with the muffle tube 3. The muffle tube 3 is surrounded with a water-cooling jacket 8. The heater 4 together with an insulation (not shown) is accommodated in a heating chamber 9 between the water-cooling jacket 8 and the muffle tube 3. Since the cylindrical member 22 has the flange portion at its lower end 26, the purging gas which has been flowed through the space between the cylindrical members 21 and 22 cannot leak into the heating chamber 9. An quartz made insulating member 10 is provided between the cylindrical member 21 and the water-cooling jacket 8 for preventing heat loss. The upper end of the cylindrical member 22 (not shown) is supported with the quartz made supporting member 23 as shown in Fig. 6.

In the furnace described above, the higher temperature of the purging gas can be achieved if the gas is passed through the heating chamber 9. However, such an embodiment is not preferred. Because not only the temperature of the purging gas fluctuates since there is a temperature distribution in the insulation within the chamber 9 but also dusts generated from the insulation are entrained with the purging gas into the muffle tube and finally contaminate the optical fiber 11, which reduces a strength of the optical fiber. However, when the wall of the muffle tube has a double-walled structure and preheating of the purging gas is carried out between the walls of the double-walled structure, the higher temperature can, of course, be achieved.

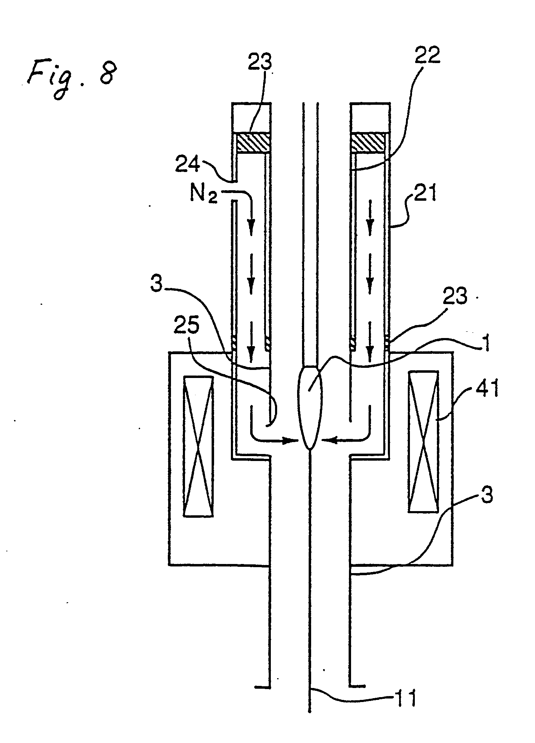

The drawing furnace for the optical fiber as just described above is shown in Fig. 8. The furnace shown in Fig. 8 is one modified from the furnace shown in Fig. 4. Therefore, differences from the furnace as shown in Fig. 4 are hereinafter mainly described.

The drawing furnace for the optical fiber shown in Fig. 8 comprises not only the double-walled structure portion constructed with the cylindrical members 21 and 22 in the accommodating section but also a double-walled structure portion in the muffle tube 3. The first and second cylindrical members 21 and 22 are connected with the muffle tube 3 through the quartz made insulating member 23. The inlet 24 for the purging gas is provided near the upper end of the first cylindrical member 21 as in Fig. 4 and the outlets 25 for the gas are disposed near the preform 1 in the muffle tube 3.

The purging gas is supplied through the inlet 24 in the space between the first and the second cylindrical members 21 and 22 and blown from the outlets 25 into the furnace inside after flowing in the both double-walled structure portions while heated.

With the embodiment as shown in Fig. 8, the purging gas can be heated not only in the preform accommodating section but also in the muffle tube in which the temperature is higher, whereby the temperature of the purging gas can be kept higher when it is introduced in the muffle tube. Then, the optical fiber having the better quality can be produced.

As described above, the optical fiber with the smaller fluctuation in its diameter than that of the conventional optical fiber can be produced according to the present invention. In the drawing furnace for the optical fiber according to the present invention, the wall of the cylindrical member and/or the wall of the muffle tube which are conventionally necessary and provided on the muffle tube to maintain the atmosphere and the temperature in the muffle tube, are formed into the plurality of walls and the purging gas is heated in the space between the adjacent walls of the plurality of walls. Therefore, it can be eliminated to extend the lengths of the cylindrical member and the preform supporting rod and the stroke distance of the feeder to heat the purging gas efficiently in the use of the conventional furnace.

Effects of the Invention

As described above, in the drawing furnace for the optical fiber according to the present invention, the purging gas can be uniformly preheated to the higher temperature than that achieved with the conventional furnace, and further the gas can be introduced into the muffle tube without lowering of the gas temperature. Therefore, the fluctuation in the outer diameter of the optical fiber can be suppressed since the fluctuation in the temperature is small, the kinematic viscosity of the purging gas is large and the turblence of the flow is suppressed. In addition, the cost for the production of the optical fiber can be reduced since the expensive gas such as He does not have to be used.

## Claims

1. A drawing furnace for an optical fiber comprising an accommodating member in which a preform for the optical fiber is accommodated, a muffle tube which is connected with the accommodating member, around which a heating means is disposed and in which a tip portion of the preform is heated and melted, and means for supplying an inert purging gas in the muffle tube or in both of the accommodating member and the muffle tube characterized in that at least a portion of at least one of the muffle tube and the accommodating member comprises at least two furnace walls adjacent walls of which have a space between them, the outermost one of them has an inlet through which the purging gas is supplied in the space, the innermost one of them has an outlet through which the purging gas leaves the space after flowing the space between the adjacent walls.

2. The furnace according to claim 1, wherein at least one of a second heating means and an insulation is provided around the walls.

3. The furnace according to claim 1, wherein the walls comprise independent cylindrical members having different diameters such that an inner diameter of a cylindrical member having the smallest diameter is larger than a diameter of the preform, and the walls are disposed concentrically such that axes thereof correspond to an axis of the furnace.

4. The furnace according to claim 1, wherein the innermost wall of the walls is made of a metal having a melting point of not lower than 1000 °C and a thermal conductivity of not smaller than 50 W/mK.

5. The furnace according to claim 1, wherein the innermost wall of the walls is made of carbon.

6. The furnace according to claim 5, wherein the carbon made wall is coated with SiC.

7. The furnace according to claim 1, wherein an innermost wall is thermally insulated from other members constituting the furnace except the walls.

8. The furnace according to claim 1, wherein the outlet for the purging gas is provided at a vicinity of a lower end of an innermost wall.

9. A process for drawing an optical fiber comprising heating and melting a tip portion of a preform for the optical fiber with passing an inert purging gas around the preform characterized in that the purging gas is supplied inside a furnace according to any one of claims 1 to 8 after heated to a temperature not lower than 800 °C between the adjacent walls of the walls.

Fig. 1

Prior Art

Fig. 2 (a)    Fig.2(b)    Fig.2(c)

EP 0 386 756 A1

Fig. 3 (a)  Fig. 3 (b)  Fig. 3 (c)

Fig. 4

23  22

24

N₂  21

25

1

41

3

11

Fig. 5

30

31

32

Fig. 6

Fig. 7

Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 13, no. 111 (C-577)[3459], 16th March 1989; & JP-A-63 285 133 (SUMITOMO ELECTRIC IND. LTD) 22-11-1988 * Figures 1,2 * | 1,3 | C 03 B 37/029 C 03 B 37/027 |
| P,X | PATENT ABSTRACTS OF JAPAN, vol. 13, no. 487 (C-649)[3835], 6th November 1989; & JP-A-01 192 741 (SUMITOMO ELECTRIC IND. LTD) 02-08-1989 * Figures 1,2 * | 1,3 | |
| P,A | IDEM | 2,9 | |
| D,A | PATENT ABSTRACTS OF JAPAN, vol. 2, no. 6 (E-4)[9921], 17th January 1978; & JP-A-52 119 949 (HITACHI SEISAKUSHO K.K.) 10-07-1977 | 1,9 | |
| A | PATENT ABSTRACTS OF JAPAN, vol. 13, no. 205 (C-595)[3553], 15th May 1989; & JP-A-01 024 045 (NT&T CORP.) 26-01-1989 | 1,3,9 | TECHNICAL FIELDS SEARCHED (Int. Cl.5) |
| A | PATENT ABSTRACTS OF JAPAN, vol. 13, no. 56 (C-566)[3404], 8th Februrary 1989; & JP-A-63 248 736 (HITACHI CABLE LTD) 17-10-1988 | 9 | C 03 B 37/00 |
| A | PATENT ABSTRACTS OF JAPAN, vol. 12, no. 279 (C-517)[3126], 1st August 1988; & JP-A-63 060 124 (SUMITOMO ELECTRIC IND. LTD) 16-03-1988 | 9 | |
| A | PATENT ABSTRACTS OF JAPAN, vol. 2, no. 51 (E-26)[863], 12th April 1978; & JP-A-53 013 435 (HITACHI SEISAKUSHO K.K.) 02-07-1978 -/- | 1 | |

The present search report has been drawn up for all claims

| Place of search | Date of completion of the search | Examiner |
|---|---|---|
| THE HAGUE | 08-06-1990 | STROUD J.G. |

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,A | PATENT ABSTRACTS OF JAPAN, vol. 13, no. 487 (C-649)[3835], 6th November 1989; & JP-A-01 192 740 (SUMITOMO ELECTRIC IND. LTD) 02-08-1989 ----- | 1,3,8 | |

TECHNICAL FIELDS
SEARCHED (Int. Cl.5)

The present search report has been drawn up for all claims

| Place of search | Date of completion of the search | Examiner |
|---|---|---|
| THE HAGUE | 08-06-1990 | STROUD J.G. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................
& : member of the same patent family, corresponding
    document

EPO FORM 1503 03.82 (P0401)